# EUROPEAN PATENT APPLICATION

(11) **EP 1 422 016 A2**
(43) Date of publication of application: **26.05.2004**
(21) Application number: 03026420.4
(22) Date of filing: 19.11.2003
(51) Int. Cl.: B23K 26/32

(54) **A method for preparing zinc-coated metal sheets to be joined by laser welding**

(30) Priority: 21.11.2002 IT TO20021014
(71) Applicant: COMAU S.p.A., 10095 Grugliasco (Torino) (IT)
(72) Inventor: Molina, Giuseppe, 10029 Villastellone (Torino) (IT); Bigando, Mauro, 10136 Torino (IT)
(74) Representative: Fioravanti, Corrado

(57) **Abstract**

In order to prepare a first zinc-coated metal sheet for joining to a second zinc-coated metal sheet by laser welding, surface knurling is formed in a zinc-coated interface surface of the first sheet. The knurling defines escape paths for the zinc vapour generated in the subsequent laser welding step. The knurling is carried out in a step subsequent to the shaping of the sheet, by a forming tool separate from the drawing die which shaped the first sheet.

## Description

The present invention relates to the field of joining zinc-coated metal sheets by laser welding.

Over recent years, several methods have been suggested for carrying out the welding operations correctly, without faults along the welding bead caused by zinc vapour.

It is known that in order for two metal sheets to be welded, each must be in contact with one another along a portion thereof (welding track). The most serious problem affecting laser welding (which makes it possible to form continuous and spot welds) of coated sheet metal consists in the emission of zinc vapour which forms during the welding process. The problem arises from the fact that zinc has a low vaporization temperature (906°C) compared to the high melting point of steel (around 1,500°C). As a result of this, when the two sheets are superimposed, the zinc vapour generated at the interface of the two sheets during welding is released from the melt bath causing defects in the bead such as bubbles or holes, which compromise the mechanical and aesthetic characteristics of the weld.

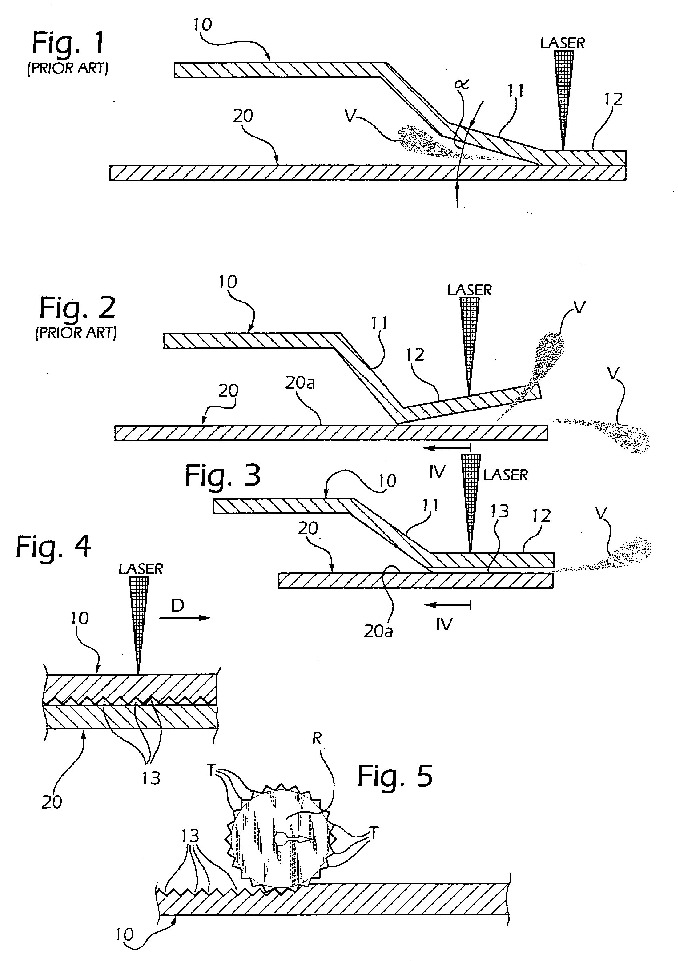

In order to better understand the art and its inherent problems, a description will first be given of some conventional welding methods, with reference to Figures 1 and 2 of the appended drawings.

In a first conventional method, illustrated schematically in Figure 1, a portion 11 of the join is inclined at an angle α around 5-10 degrees near a flange 12 of one (10) of the two pressed sheets 10, 20 to be welded together, thereby providing a preferential exit for the zinc vapour V. This method involves using a more complicated forming mould for the first sheet.

In a second conventional method, illustrated schematically in Figure 2, the peripheral flange 12 of the upper sheet 10 is bent so as to incline upwards away from the lower sheet 20. This second method, known for example from GB-A-2339401, in addition to requiring a more complicated drawing die (as discussed with reference to Figure 1), also requires a tool for pressing the diverging lip of the upper sheet against the lower sheet along the peripheral welding area.

According to the welding method described in DE-A-10042538, outlets for the escape of the zinc vapour are created by roughening both the facing surfaces of the two sheets to be welded together. The roughnesses on one surface has a different pattern from those of the facing surface, thereby defining paths for the zinc vapour to escape. However, roughening the surfaces of both sheets involves complications in both the drawing dies and can even require perforations to be formed through one of the two sheets to be welded together, in order to improve the escape of zinc vapour from the interface area.

A method is known from EP-A-1084787 for welding zinc-coated metal sheets in which one of the two sheets is deformed plastically through its entire thickness to form channels arranged transversely of the weld bead and opening on either side of the welding area. This arrangement also requires a more complicated die in order to form the escape channels for the zinc vapour and, in addition, does not allow to achieve a continuous weld bead.

The object of the present invention is thus to provide an improved method, which is both simple and economical, in order to eliminate the disadvantages discussed above.

This and other objects and advantages, which will be understood better hereinbelow, are achieved according to the invention by providing a method as defined in Claim 1. Preferred embodiments of the invention are defined in the dependent Claims.

A preferred, but non-limitative embodiment of the method of the invention will now be described, with reference to the appended drawings, in which:
Figure 1 is a partially sectioned view of the junction area between two metal sheets during a first conventional laser welding process;
Figure 2 is a similar view to that of Figure 1, during a second prior art welding process;
Figure 3 is a schematic view in transversal cross section of the junction area between two zinc-coated metal sheets in one phase of the welding method of the invention;
Figure 4 is a longitudinal section taken on the line IV-IV of Figure 3;
Figure 5 is a schematic view illustrating a knurling operation for preparing one of two sheets to be welded together;
Figure 6 is a schematic view on an enlarged scale shown in a longitudinal section plane parallel to the direction of weld bead;
Figure 7 is a schematic plan view, on an enlarged scale, showing three different configurations of the channels obtained by knurling according to the present invention; and
Figures 8, 9, 10 and 11 are longitudinal sectional views, similar to Figure 4, illustrating four further examples of application of the method of the invention.

With reference to Figures 3 to 5, two metal sheets to be welded together are indicated 10, 20. The sheets are formed on a drawing die (not shown) to give them the desired shape. At least one of the two sheets 10, 20 is zinc-coated, with a surface coating at the interface of the two sheets. The first sheet 10, defined here as the upper, has a peripheral flange 12 for welding by laser to the second, lower sheet 20. The peripheral flange 12 is joined to the main portion of the sheet 10 by an oblique portion 11. Channels 13 are formed in the lower surface of the peripheral flange 12, that is in the surface facing the smooth surface 20a of the second sheet 20, which pass through the area of the weld bead formed by the laser beam. The channels 13 can be oriented transversally, that is orthogonal to the direction D of advancement of the laser beam, or inclined at oblique angles to the path of the laser beam, as shown schematically in Figure 7.

One important characteristic of the method of the invention consists in the fact that the channels 13 are not formed in the drawing die in which the sheets to be welded are shaped, but are formed in a step separate from the drawing step, preferably in a subsequent step, by means of a knurling operation or the like. The channels 13 are made in the form of impressions, preferably parallel to each other, made only in the surface of the sheet and not through its entire thickness. Figure 5 schematically illustrates the knurling operations, whereby a knurling or forming roller R with peripheral teeth T is passed over the surface of one of the two sheets which, in use, will be facing and welded to the surface of the opposite sheet. In the example of Figures 3 and 4, the channels or knurls 13 are formed in the sheet 10, in particular in the peripheral flange 12 thereof.

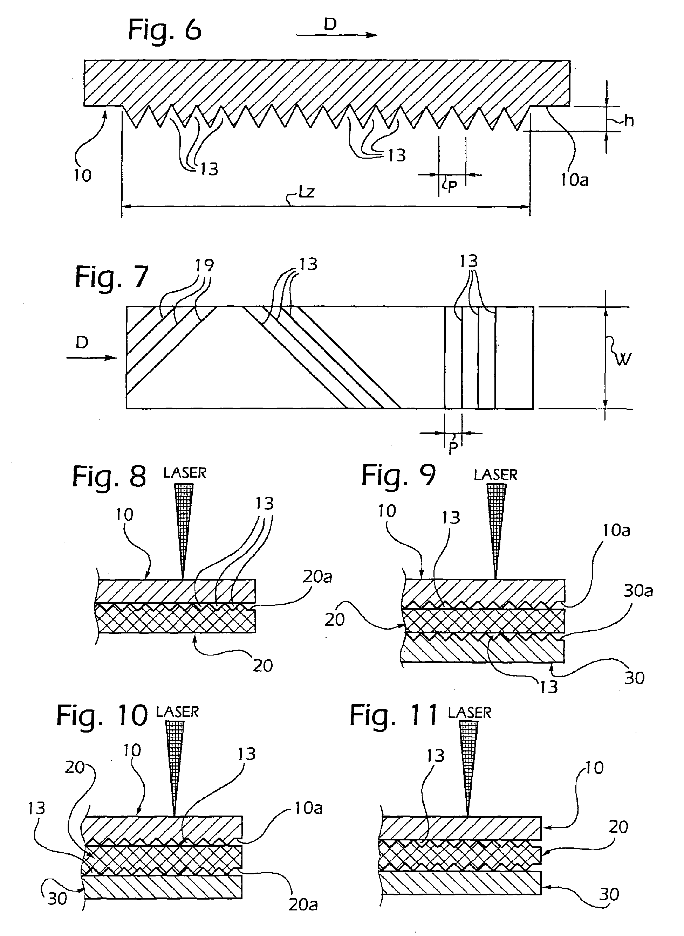

In the example of Figure 8, on the other hand, the channels 13 are formed instead in the surface 20a of the sheet here defined as the base.

Figure 9 illustrates three sheets 10, 20, 30 for welding together in a sandwich and the channels 13 are formed in the surfaces 10a, 30a of the two outer sheets 10, 30, both facing the intermediate sheet 20 which has smooth surfaces.

In the example of Figure 10, the channels 13 are formed both in the surface of the upper sheet 10 facing the intermediate sheet 20 and in the bottom surface of the intermediate sheet 20 facing the bottom sheet 30, which has smooth surfaces.

In the example of Figure 11, channels 13 are formed in the two opposite surfaces of the intermediate sheet 20, while the facing surfaces of the two outer sheets 10, 30 are smooth.

With reference to Figures 6 and 7, particularly effective results can be achieved, in terms of the resistance and uniformity of the weld bead obtained at the end of the process, if the height h of the knurling 13 is between around 0.10 and 0.15mm, with the pitch p of the knurling between around 0.75 and 2mm, according to the thickness of the sheet metal. The width W of the knurling is preferably no less than around 5mm.

The welding process and the associated knurling can naturally be continuous or discontinuous, according to requirements; it is preferable if the length Lz of the knurling is slightly greater than the intended length of the weld bead. In particular, it is preferable if the knurled area starts a few millimetres before the theoretical start position of the laser welded portion and finishes a few millimetres after the position selected for the end of the welded portion, thereby allowing for any relative positioning errors of the sheets and/or the laser beam.

It will be appreciated that the present invention makes it possible to separate the forming of the escape channels for the zinc vapour from the dies in which the sheets are shaped. If the channels or shallow impressions such as those illustrated were moulded by formations on the drawing die, these formations would inevitably wear away over a relatively short time, making it necessary to replace the entire die. Replacing only a knurling roller, as required by the method of the invention, is far more economical and makes it possible to use the dies far longer, as well as being able to select the welding area at will, in dependence on requirements.

Naturally, the principle of the invention remaining unchanged, embodiments and manufacturing details may vary widely from those illustrated and described here, purely by way of non-limitative example.

## Claims

1. A method for preparing at least a first drawn metal sheet to be welded by laser to at least a second sheet, wherein at least one of the two sheets has a zinc coating on an interface surface which will remain interposed between the two sheets once they are welded, the method including the step of roughening at least a first surface of the first sheet intended to face a second surface of the second sheet, so as to define with this second surface a plurality of escape paths for zinc vapour generated in a subsequent laser welding step, **characterised in that** the said step of roughening the first surface is carried out in a step separate from the drawing step by which the sheet was shaped, by a forming tool separate from the drawing die used to shape the first sheet.

2. A method according to Claim 1, **characterised in that** the step of roughening the first surface is carried out after the step of drawing the first sheet.

3. A method according to Claims 1 or 2, **characterised in that** the roughening step involves only the said first surface of the first sheet and not the entire thickness of the sheet.

4. A method according to Claim 1, **characterised in that** the said roughening step includes the step of passing a forming roller with peripheral teeth over the said surface.

5. A method according to Claim 1, **characterised in that** the said roughness consists of parallel knurls.

6. A method according to Claim 5, **characterised in that** the knurls have a pitch ranging between 0.75 and 2mm.

7. A method according to Claims 5 or 6, **characterised in that** the height of the knurls is between around 0.10 and 0.15mm.

8. A method according to Claims 5, 6 or 7, **characterised in that** the width of the knurls is not less than 5mm.

9. A method according to Claim 5, **characterised in that** the knurling extends for longer than the intended length of the weld bead.
